# EUROPÄISCHE PATENTSCHRIFT

(11) **EP 1 112 198 B1**
(45) Veröffentlichungstag und Bekanntmachung des Hinweises auf die Patenterteilung: **16.07.2003**
(21) Anmeldenummer: 99968656.1
(22) Anmeldetag: 03.09.1999
(51) Int. Cl.: B60P 7/08, B66C 1/66

(54) **ANSCHLUSSVORRICHTUNG**
CONNECTING DEVICE
DISPOSITIF DE CONNEXION

(30) Priorität: 04.09.1998 DE 19841992
(43) Veröffentlichungstag der Anmeldung: 04.07.2001
(73) Patentinhaber: RUD-KETTENFABRIK RIEGER & DIETZ GMBH U. CO., 73432 Aalen-Unterkochen (DE)
(72) Erfinder: SMETZ, Reinhard, D-86720 Baldingen (DE)
(74) Vertreter: Böning, Manfred, Prof.Dr.-Ing.
(86) Internationale Anmeldenummer: DE9902863
(87) Internationale Veröffentlichungsnummer: WO00013937

(56) Entgegenhaltungen:
- DE-A- 3 410 445
- DE-C- 3 509 877
- DE-C- 3 803 248
- DE-U- 29 718 318

## Beschreibung

### Technisches Gebiet

Die Erfindung betrifft eine Anschlußvorrichtung für Anschlagoder Zurrmittel mit einem zum Anschließen des Anschlag- oder Zurrmittels dienenden Anschlußteil und mindestens einem zum Befestigen der Vorrichtung an einer von einem zu transportierenden Gut, einem Fahrzeugteil od.dgl. gebildeten Basis durch eine Schweißverbindung dienenden Befestigungsteil, das ein Lager für eine Schwenkachse des Anschlußteiles formt und warzenförmige Distanznocken aufweist, die einen Mindestluftspalt für eine Wurzelschweißung definieren.

### Stand der Technik

Aus der DE 35 09 877 C1 ist eine Vorrichtung der vorstehenden Art mit einem im wesentlichen D-förmigen Anschlußteil und einem im wesentlichen U-förmigen Befestigungsteil bekannt, bei der an den Stirnflächen der Schenkel des Befestigungsteiles die Wurzelschweißung ermöglichende Distanznocken angeordnet sind. Die Distanznocken befinden sich mit anderen Worten an der Stelle des Befestigungsteiles, die der allgemein üblichen, z.B. auch aus der DE 33 01 960 C2 und der DE 38 03 248 C1 bekannten Anbringungsart einschlägiger Anschlußvorrichtungen auf einer planen Basis Rechnung trägt.

### Darstellung der Erfindung

Der Erfindung liegt die Aufgabe zugrunde, die Möglichkeiten der Anbringung von Anschlußvorrichtungen der in Betracht gezogenen Gattung zu erhöhen. Diese Aufgabe wird erfindungsgemäß dadurch gelöst, daß die Außenfläche des Befestigungsteiles derart mit einer Vielzahl von Distanznocken versehen ist, daß die Einhaltung des Mindestluftspaltes unabhängig von der durch die jeweils zur Anlage an die Basis kommenden Flächen bestimmten Lage des Befestigungsteiles zur Basis gewährleistet ist.

Die erfindungsgemäße Anschlußvorrichtung bietet den aus der Sicht des Praktikers nicht zu unterschätzenden Vorteil, die Lage einer Anschlußvorrichtung optimal an die jeweiligen Gegebenheiten anzupassen. So bereitet u.a. weder ihre Anordnung in Ecken noch in V-förmigen Nuten Probleme.

Wie aus den bereits erwähnten DE 35 09 877 C1 und DE 38 03 248 C1 bekannt, erweist es sich als zweckmäßig, das Anschlußteil und das bzw. die Befestigungsteil(e) einer Anschlußvorrichtung mit Hilfe eines von einer Feder oder einem Klemmorgan gebildeten Sicherungselementes zu einer unverlierbaren weitgehend spielfreien Einheit zu verbinden. Um zu gewährleisten, daß das Sicherungselement auch bei einem Einbau der Anschlußvorrichtung in bisher nicht üblichen Positionen seine Lage beibehält, erweist es sich als zweckmäßig, daß das Anschlußteil die Deformation bzw. Lageveränderung des Sicherungselementes begrenzende, mit der Außenfläche des Befestigungsteiles zusammenwirkende Anschläge aufweist. Die Anschläge lassen sich dabei noch zu einem weiteren Zweck nutzen, indem man den Abstand zwischen ihnen und der Schwenkachse des Anschlußteiles und die Wandstärke des Befestigungsteiles so aufeinander abstimmt, daß nur Anschlußteile mit Befestigungsteilen gleicher Tragfähigkeit kombinierbar sind.

Weitere Einzelheiten und Merkmale der Erfindung ergeben sich aus den Unteransprüchen und der nachstehenden Beschreibung zweier in der beigefügten Zeichnung dargestellter Ausführungsbeispiele.

### Kurze Beschreibung der Zeichnungen

Es zeigen:
- Fig. 1: teilweise im Schnitt die Vorderansicht einer ersten Ausführungsform einer an einer planen Basis befestigten Anschlußvorrichtung,
- Fig. 2: einen Schnitt längs der Linie II-II in Fig. 1,
- Fig. 3: die in einem 90°-Winkelprofil befestigte Anschlußvorrichtung gemäß den Figuren 1 und 2,
- Fig. 4: die in einer Ecke angeordnete Anschlußvorrichtung gemäß den Figuren 1 und 2,
- Fig. 5: die Vorderansicht einer modifizierten Anschlußvorrichtung und
- Fig. 6: einen Schnitt längs der Linie VI-VI in Fig. 5 durch eine in einer V-förmigen Nut befestigten Anschlußvorrichtung gemäß Fig. 5.

### Wege zur Ausführung der Erfindung

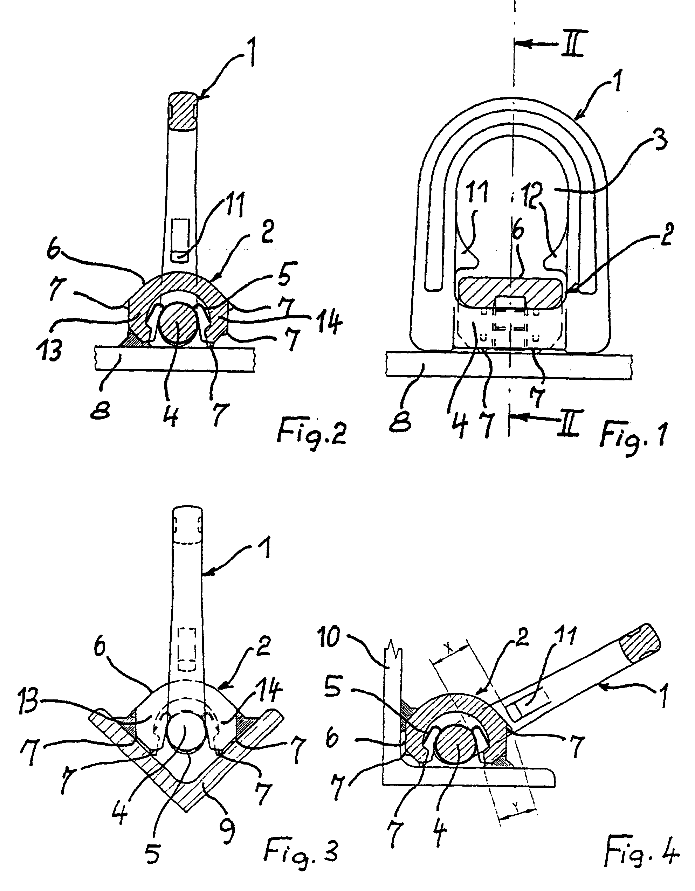

In den Figuren 1 bis 4 sind 1 das Anschlußteil und 2 das Befestigungsteil einer Anschlußvorrichtung. Das Anschlußteil 1 besteht aus einem im wesentlichen D-förmigen Grundkörper, der eine Öse 3 zum Einhängen eines beispielsweise von einem Haken oder einem Schäkel gebildeten Endgliedes eines zum Verzurren oder Anheben einer Last dienenden Zurrgurtes oder Kettenstranges bildet. Das Anschlußteil 1 besitzt eine im Befesti- gungsteil 2 gelagerte Schwenkachse 4, die durch ein aus einer im wesentlichen omegaförmigen Feder bestehendes Sicherungs-element 5 in zwei Lagerschalen des Befestigungsteiles 2 gedrückt wird. Das Sicherungselement 5 hält das Anschlußteil 1 und das Befestigungsteil 2 nicht nur zusammen, sondern verhindert auch störende Klappergeräusche der nicht genutzten Anschlußvorrichtung.

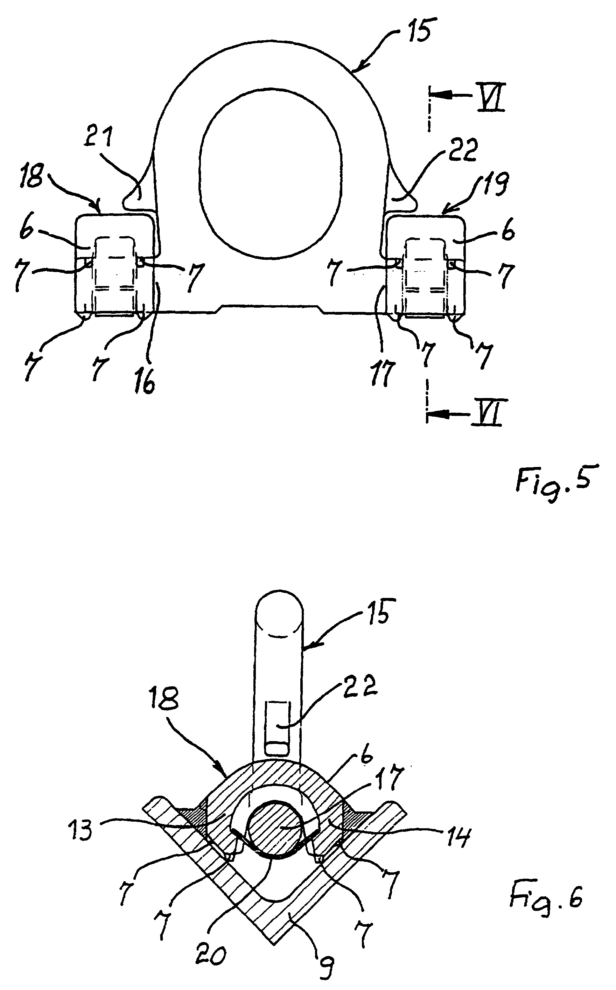

Im Bereich seiner Außenfläche 6 ist das im wesentlichen U-förmige Befestigungsteil 2 mit einer Vielzahl von warzenförmigen Distanznocken 7 versehen. Aufgabe dieser Distanznocken 7 ist es, die Einhaltung eines für eine einwandfreie Wurzelschweißung erforderlichen Mindestluftspaltes zwischen dem Befestigungsteil 2 und einer Basis zu gewährleisten, die im Falle der Figuren 1 und 2 von einer planen Platte 8, im Falle der Figur 3 von einer Winkelprofilschiene 9 und im Falle der Figur 4 von einer L-förmigen Eckprofilschiene 10 gebildet wird. Um insbesondere bei einem Einbau der Anschlußvorrichtung in der in Figur 3 dargestellten Position Überbeanspruchungen des Sicherungselementes 5 zu verhindern, ist das Anschlußteil 1 mit in das Innere seiner Öse 3 ragenden Anschlägen 11 und 12 versehen, die im Zusammenspiel mit der Außenfläche 6 des Befestigungsteiles 2 unerwünschte Bewegungen zwischen dem Anschlußteil 1 und dem Befestigungsteil 2 verhindern.

In Figur 4 ist gezeigt, daß die Anschläge 11,12 im übrigen für Zwecke der Zuordnung von Anschlußteilen 1 und Befestigungsteilen 2 gleicher Tragfähigkeit genutzt werden können, indem man den Abstand X zwischen den Anschlägen 11,12 und der Schwenkachse 4 des Befestigungsteiles 2 so auf die Wandstärke Y des Befestigungsteiles 2 abstimmt, daß die Kombination eines Befestigungsteiles 2 der Tragfähigkeit n mit einem Anschlußteil 1 der nächstgeringeren Tragfähigkeit n-1 unmöglich ist.

Zur Vermeidung von Mißverständnissen sei darauf hingewiesen, daß die Figur 2 nicht den Endzustand der Schweißverbindung zeigt, sondern auch der rechte Schenkel 14 der beiden Schenkel 13,14 des Befestigunsteiles 2 noch durch eine Schweißnaht mit der Basis 8 verbunden werden muß.

Die Figuren 5 und 6 zeigen eine Anschlußvorrichtung, deren Einsatz sich in Fällen als zweckmäßig erweist, in denen große Kräfte in das Anschlußteil 15 eingeleitet werden. Das Anschlußteil 15 weist zwei, eine Schwenkachse bildende seitlich über einen im wesentlichen D-förmigen Grundkörper vorstehende Zapfen 16, 17 auf, die in Befestigungsteilen 18,19 gelagert sind, deren Aufbau im wesentlichen dem Aufbau des Befestigungsteiles 2 entspricht. Auch die Befestigungsteile 18,19 sind folglich mit Distanznocken 7 ausgestattet, die über ihre Außenfläche 6 verteilt sind. Zum Schutz des hier von einem Blechstreifen gebildeten Sicherungselementes 20 gegen unerwünschte Deformationen bzw. Verlagerungen ist auch der Grundkörper des Anschlußteiles 15 mit Anschlägen 21,22 versehen, die anders als bei der zuvor beschriebenen Ausführungsform jedoch von nach außen gerichteten Vorsprüngen gebildet werden.

Bei beiden beschriebenen Konstruktionen weisen die Schenkel 13,14 der U-förmigen Befestigungsteile 2 bzw. 18,19 im wesentlichen parallele Seitenflächen auf, die über V-förmig zueinander orientierte Schrägflächen in die Enden der Schenkel begrenzende Stirnflächen übergehen. Jede der vorgenannten Flächen ist dabei mit Distanznocken 7 ausgestattet, die in Richtung der Schwenkachsen der Anschlußteile 1 bzw. 15 betrachtet im Abstand voneinander angeordnet sind.

## Patentansprüche

1. Anschlußvorrichtung für Anschlag- oder Zurrmittel mit einem zum Anschließen des Anschlag- oder Zurrmittels dienenden Anschlußteil (1;15) und mindestens einem zum Befestigen der Vorrichtung an einer von einem zu transportierenden Gut, einem Fahrzeugteil od.dgl. gebildeten Basis durch eine Schweißverbindung dienenden Befestigungsteil (2;18,19), das ein Lager für eine Schwenkachse (4;16,17) des Anschlußteiles (1;15) formt und warzenförmige Distanznocken (7) aufweist, die einen Mindestluftspalt für eine Wurzelschweißung definieren, **dadurch gekennzeichnet, daß** die Außenfläche (6) des Befestigungsteiles (2;18,19) derart mit einer Vielzahl von Distanznocken (7) versehen ist, daß die Einhaltung des Mindestluftspaltes unabhängig von der durch die jeweils zur Anlage an die Basis kommenden Flächen bestimmten Lage des Befestigungsteiles (2;18,19) zur Basis (8,9,10) gewährleistet ist.

2. Vorrichtung nach Anspruch 1, **dadurch gekennzeichnet, daß** das im wesentlichen U-förmige Befestigungsteil (2;18,19) Schenkel (13,14) mit im wesentlichen parallelen Seitenflächen aufweist, die über V-förmig zueinander orientierte Schrägflächen in die Enden der Schenkel (13,14) begrenzende Stirnflächen übergehen, und daß an jeder der vorgenannten Flächen jeweils zwei in Richtung der Schwenkachse (4;16,17) des Anschlußteiles (1;15) betrachtet im Abstand voneinander angeordnete Distanznocken (7) vorgesehen sind.

3. Vorrichtung nach Anspruch 1 oder 2 mit einem den Zusammenhalt des Anschlußteiles (1;15) und des Befestigungsteiles (2;18,19) sichernden, die Schwenkachse des Anschlußteiles (1;15) gegen das Lager des Befestigungsteiles (2;18,19) drükkenden Sicherungselement (5;20), **dadurch gekennzeichnet, daß** das Anschlußteil (1;15) die Deformation bzw. Lageveränderung des Sicherungselementes (5;20) begrenzende, mit der Außenfläche (6) des Befestigungsteiles (2;18,19) zusammenwirkende Anschläge (11,12;21,22) aufweist.

4. Vorrichtung nach Anspruch 3, **dadurch gekennzeichnet, daß** die Schwenkachse (4) vom geraden Abschnitt eines im wesentlichen D-förmigen Anschlußteiles (1) gebildet wird.

5. Vorrichtung nach Anspruch 4, **dadurch gekennzeichnet, daß** die Anschläge (11,12) von in das Innere der Öse (3) des D-förmigen Anschlußteiles (1) ragenden, fluchtenden Vorsprüngen gebildet werden.

6. Vorrichtung nach Anspruch 3, **dadurch gekennzeichnet, daß** daß die Schwenkachse von seitlichen Zapfen (16,17) eines im wesentlichen D-förmigen Anschlußteiles (15) gebildet wird.

7. Vorrichtung nach Anspruch 6, **dadurch gekennzeichnet, daß** die Anschläge (21,22) von nach außen ragenden, fluchtenden Vorsprüngen des D-förmigen Anschlußteiles (15) gebildet werden.

8. Vorrichtung nach einem der Ansprüche 3 bis 7, **dadurch gekennzeichnet, daß** der Abstand (X) zwischen den Anschlägen (11,12;21,22) und der Schwenkachse (4;16,17) des Anschlußteiles (1;15) und die Wandstärke (Y) des Befestigungsteiles (2;18,19) so aufeinander abgestimmt sind, daß nur Anschlußteile (1;15) mit Befestigungsteilen (2;18,19) gleicher Tragfähigkeit kombinierbar sind.

## Claims

1. A connecting device for binding or lashing means having a connecting part (1; 15), which serves for connecting the binding or lashing means, and having at least one fastening part (2; 18, 19), which serves for fastening the device on a base by a weld connection, said base being formed by an article to be transported, a vehicle part or the like, and which forms a bearing for a pivot pin (4; 16, 17) of the connecting part (1; 15) and has protuberance-like spacing projections (7) which define a minimum clearance for a root weld, **characterized in that** the outer surface (6) of the fastening part (2; 18, 19) is provided with a multiplicity of spacing projections (7) such that it is ensured that the minimum clearance is maintained irrespective of the position of the fastening part (2; 18, 19) in relation to the base (8, 9, 10), this position being determined by the surfaces which come into abutment in each case against the base.

2. The device as claimed in claim 1, **characterized in that** the essentially U-shaped fastening part (2; 18, 19) has legs (13, 14) with essentially parallel side surfaces which merge, via oblique surfaces oriented in the form of a V in relation to one another, into end surfaces which bound the ends of the legs (13, 14), and **in that** provided on each of the above-mentioned surfaces are in each case two spacing projections (7) which are spaced apart from one another, as seen in the direction of the pivot pin (4; 16, 17) of the connecting part (1; 15).

3. The device as claimed in claim 1 or 2, having a securing element (5; 20) which ensures that the connecting part (1; 15) and the fastening part (2; 18; 19) are held together and forces the pivot pin of the connecting part (1; 15) against the bearing of the fastening part (2; 18; 19), **characterized in that** the connecting part (1; 15) has stops (11, 12; 21, 22) which limit the deformation and/or changing position of the securing element (5; 20) and interact with the outer surface (6) of the fastening part (2; 18, 19).

4. The device as claimed in claim 3, **characterized in that** the pivot pin (4) is formed by the rectilinear section of an essentially D-shaped connecting part (1).

5. The device as claimed in claim 4, **characterized in that** the stops (11, 12) are formed by aligned protrusions which project into the interior of the eyelet (3) of the D-shaped connecting part (1).

6. The device as claimed in claim 3, **characterized in that** the pivot pin is formed by lateral stubs (16, 17) of an essentially D-shaped connecting part (15).

7. The device as claimed in claim 6, **characterized in that** the stops (21, 22) are formed by outwardly projecting, aligned protrusions of the D-shaped connecting part (15).

8. The device as claimed in one of claims 3 to 7, **characterized in that** the distance (X) between the stops (11, 12; 21, 22) and the pivot pin (4; 16, 17) of the connecting part (1; 15) and the wall thickness (Y) of the fastening part (2; 18, 19) are coordinated with one another such that it is only possible to combine connecting parts (1; 15) with fastening parts (2; 18, 19) of the same load-bearing capacity.

## Revendications

1. Dispositif de raccordement pour un dispositif de blocage ou un dispositif d'amarrage avec une pièce de raccordement (1; 15) utilisée pour raccorder le dispositif de blocage ou le dispositif d'amarrage et avec au moins une pièce de fixation (2; 18; 19) utilisée pour fixer le dispositif à une base formée par un matériau à transporter, une pièce de véhicule ou pièce similaire via un joint soudé, pièce de fixation qui forme un support pour un axe de pivotement (4; 16, 17) de la pièce de raccordement (1; 15) et présente des ergots d'écartement (7) en forme de boutons, qui définissent un jeu de coussinet minimum pour la racine de la soudure, **caractérisé en ce que** la surface externe (6) de la pièce de fixation (2; 18, 19) est prévue avec plusieurs ergots d'écartement (7), de sorte que le respect du jeu de coussinet minimum est garanti pour la base (8, 9, 10) indépendamment de la position de la pièce de fixation (2; 18, 19) déterminée par les positions respectives pour disposer les surfaces situées au niveau de la base.

2. Dispositif selon la revendication 1, **caractérisé en ce que** la pièce de fixation (2; 18, 19) généralement en forme de U présente des montants (13, 14) avec des faces latérales généralement parallèles, qui aboutissent ; par des faces obliques orientées en V l'une par rapport à l'autre, dans des façades délimitant les extrémités des montants (13, 14) et **en ce que**, au niveau de chacune des faces précitées, respectivement deux ergots d'écartement (7) éloignés l'un de l'autre dans le sens de l'axe de pivotement (4 ; 16, 17) de la pièce de raccordement (1 ; 15).

3. Dispositif selon la revendication 1 ou 2, avec un élément de sécurité (5 ; 20) sécurisant la cohésion de la pièce de raccordement (1 ; 15) et de la pièce de fixation (2 ; 18, 19), appuyant l'axe de pivotement de la pièce de raccordement (1 ; 15) par rapport à la position de la pièce de fixation (2 ; 18, 19), **caractérisé en ce que** la pièce de raccordement (1; 15) présente des dispositifs de blocage (11, 12 ; 21, 22) limitant la déformation ou le changement de position de l'élément de sécurité (5 ; 20) et agissant avec la surface externe (6) de la pièce de fixation (2 ; 18, 19).

4. Dispositif selon la revendication 3, **caractérisé en ce que** l'axe de pivotement (4) est formé d'une section droite d'une pièce de raccordement (1) généralement en forme de D.

5. Dispositif selon la revendication 4, **caractérisé en ce que** les dispositifs de blocage (11, 12) sont formés par les parties saillantes alignées se dressant à l'intérieur de l'oeillet (3) de la pièce de raccordement (1) en forme de D.

6. Dispositif selon la revendication 3, **caractérisé en ce que** l'axe de pivotement est formé par des tourillons latéraux (16, 17) d'une pièce de raccordement (15) généralement en forme de D.

7. Dispositif selon la revendication 6, **caractérisé en ce que** les dispositifs de blocage (21, 22) sont formés par des parties saillantes alignées se dressant vers l'extérieur de la pièce de raccordement (15) en forme de D.

8. Dispositif selon l'une quelconque des revendications 3 à 7, **caractérisé en ce que** la distance (X) entre les dispositifs de blocage (11, 12 ; 21, 22) et l'axe de pivotement (4 ; 16, 17) de la pièce de raccordement (1 ; 15) et l'épaisseur de la paroi (Y) de la pièce de fixation (2 ; 18, 19) est déterminée de sorte que seules les pièces de raccordement (1 ; 15) peuvent être combinées avec des pièces de fixation (2 ; 18, 19) de portance équivalente.
